# FASCICULE DE BREVET EUROPEEN

(11) **EP 0 668 577 B1**
(45) Date de publication et mention de la délivrance du brevet: **11.08.1999**
(21) Numéro de dépôt: 95810033.1
(22) Date de dépôt: 17.01.1995
(51) Int. Cl.: G07D 7/00

(54) **Installation de contrôle de qualité des feuilles imprimées, notamment des papiers-valeur**
Qualitätskontroll-Anlage für gedruckte Blätter, insbesondere Wertpapiere
Quality control assembly for printed sheets, in particular for value-papers

(30) Priorité: 04.02.1994 IT MI940198
(43) Date de publication de la demande: 23.08.1995
(73) Titulaire: DE LA RUE GIORI S.A., 1003 Lausanne (CH)
(72) Inventeur: Stringa, Luigi, I-38050 Trento (IT)
(74) Mandataire: Jörchel, Dietrich R.A.

(56) Documents cités:
- DE-A- 3 500 650
- FR-A- 2 428 287
- GB-A- 2 064 111
- GB-A- 2 107 911
- US-A- 3 814 943
- US-A- 4 231 014
- US-A- 4 319 137

## Description

La présente invention concerne une installation de contrôle de qualité des feuilles imprimées, notamment des papiers-valeur, comprenant des moyens de transfert desdites feuilles et des moyens de contrôle de la qualité de l'impression.

Le contrôle de qualité d'un papier imprimé sur ses deux faces exige un contrôle de chacune de ses faces par réflexion ainsi qu'un contrôle par transparence. Le contrôle par transparence permet de contrôler la qualité du papier, le registre des images, la présence éventuelle du filigrane. Si la feuille n'est imprimée que sur une face, on effectue un contrôle par réflexion et un par transparence. Dans les installations de contrôle de qualité de feuilles imprimées on utilise soit des caméras matricielles, soit des caméras à balayage. Lors de l'utilisation des caméras matricielles, chacun des trois contrôles, à savoir le contrôle des deux faces de la feuille imprimée (par réflexion) et le contrôle par transparence, exige une section de transport longue au moins égale à une feuille ce qui conduit à une installation encombrante et coûteuse (US-A-3814943).

Lors de l'utilisation des caméras à balayage, on utilise un cylindre sur lequel la feuille passe pour le contrôle d'une face. Un tel cylindre est décrit dans le EP-A-559 615 du déposant

Une installation pour le transfert à plat des feuilles équipée de barres à pinces permettant de saisir le bord d'une feuille à contrôler et la faire glisser sur des barres d'appui pour un contrôle par transparence d'une zone étroite est décrit dans le EP-A- 0 559 616 du déposant. Des buses d'aspiration sont prévues d'un côté de la fente de contrôle sur les barres d'appui pour permettre de maintenir la feuille contrôlée à plat.

Il s'est avéré que pour un contrôle de la qualité de l'impression d'une feuille imprimée, cette dernière doit être de préférence complètement à plat sur une surface plane, plutôt que sur un cylindre, et également sur une surface continue assurant, d'une part, que la feuille est parfaitement à plat et, d'autre part, que l'arrière plan présente une homogénéité au moins au niveau optique.

La présente invention a pour but de proposer une installation de contrôle de la qualité d'impression d'une feuille imprimée permettant de réaliser les conditions susmentionnées, et en plus d'obtenir une installation compacte.

L'installation selon l'invention est caractérisée par la clause caractérisante de la revendication 1.

Les avantages de l'installation selon l'invention sont les suivants :

Pour le contrôle de la qualité de l'impression d'un papier-valeur tel qu'un billet de banque, un papier fiduciaire, etc, notamment par réflexion, la feuille est maintenue parfaitement à plat devant la caméra ce qui permet d'améliorer la fiabilité et la qualité du contrôle.

Le déplacement se faisant dans un plan de préférence horizontal, les moyens de transport utilisés sont les mêmes aussi bien pour le contrôle de la qualité par réflexion que par transparence ce qui permet de rationnaliser la fabrication et effectuer les trois contrôles en un seul passage.

Selon l'exécution préférée, on utilise des caméras à lecture linéaire (ligne par ligne) ce qui permet d'avoir des fenêtres de lecture étroites. En effet, il suffit que la fenêtre pour le contrôle d'une face par réflexion présente une longueur correspondant à une fraction de la longueur de la feuille. La longueur de la fenêtre est fonction de la résolution de la caméra utilisée et il faut qu'elle permette l'éclairage et la réflexion de la zone contrôlée. Ainsi, on peut obtenir une installation de contrôle très compacte, les deux fenêtres de contrôle par réflexion demandant chacune qu'une fraction de la longueur d'une feuille.

Selon une exécution préférée, les moyens de transfert sont deux dispositifs à tapis roulant superposés, les feuilles étant pincées entre ces dispositifs ce qui permet d'assurer que la feuille se trouve bien à plat. Pour le contrôle de la qualité de l'impression par réflexion aux endroits ou se trouve chacune des caméras assurant ce contrôle et sur une longueur correspondant à la longueur de la fenêtre, l'un des tapis roulants s'interrompe et la feuille est maintenue par aspiration sur l'autre tapis, assurant du même coup une tenue à plat parfaite et également un arrière plan continu ce qui permet un contrôle optique dans des conditions optimales.

Selon une autre variante d'exécution, au lieu d'utiliser des tapis roulants, on utilise des plaques de guidage superposées et des paires de rouleaux permettant de faire avancer les feuilles, l'espacement entre les rouleaux étant inférieur à la longueur des feuilles à contrôler. Devant les caméras pour le contrôle par réflexion l'une des plaques manque sur une longueur égale à la longueur de la fenêtre, la deuxième plaque maintenant la feuille bien à plat par aspiration, ce qui permet également d'assurer une position parfaitement plate et un arrière plan continu pour le contrôle de qualité.

Dans le but d'éviter que les trous d'aspiration puissent perturber l'homogénéité optique du support sur lequel se trouve la feuille, lors du contrôle par réflexion, les trous d'aspiration sont obliques, leur axe faisant un angle de 30° - 45° par rapport au plan de transport. Cette inclinaison des trous permet que la surface sur laquelle la feuille se trouve soit homogène du point de vue optique.

Le contrôle de la transparence se fait en utilisant face à ladite caméra une paire de plaques superposées munie d'une fente perpendiculaire au déplacement de feuilles, ce qui assure également une position parfaitement plaque de la feuille. A cet endroit il est également possible d'assurer un guidage latéral des feuilles lors de leur passage entre les plaques pour éviter qu'elles se mettenet de travers.

L'invention sera décrite plus en détail à l'aide du dessin anenxé.

La figure 1 est une vue schématique du côté d'une installation avec des tapis roulants.

La figure 2a montre un agrandissement de l'endroit de contrôle par transparence.

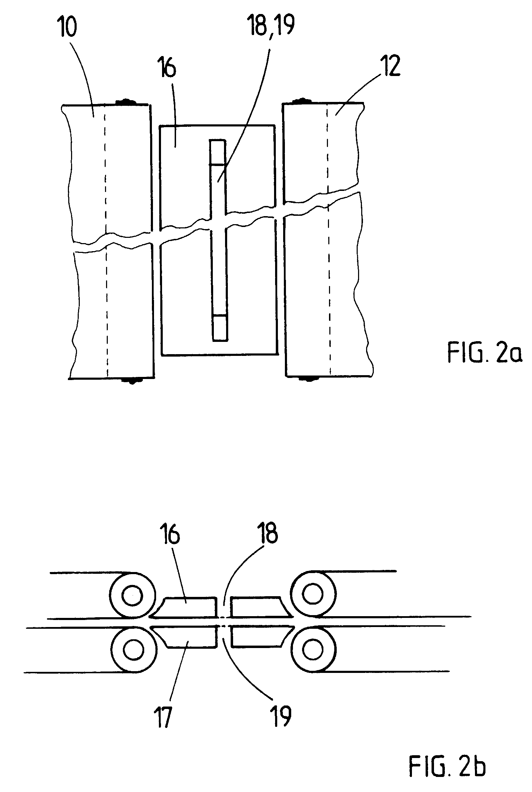

La figure 2b est une vue en plan de la figure précédente.

La figure 3 est une vue schématique de côté d'une installation selon la présente invention, les moyens de transport étant des plaques de guidage et des rouleaux superposés.

La figure 4 est une vue parteille d'une exécution préférée.

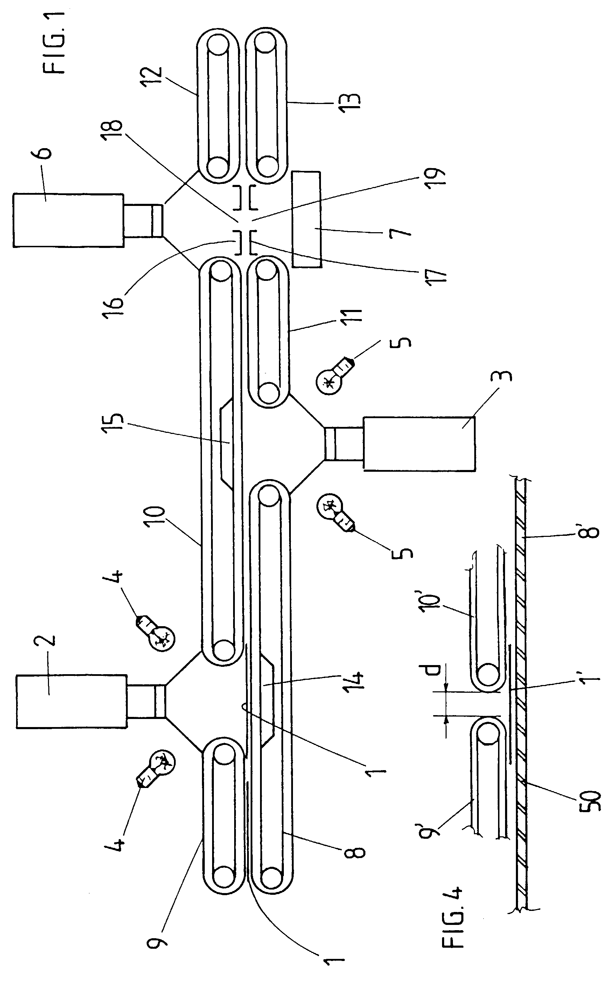

Le dispositif de la figure 1 comprend des moyens de transfert pour des feuilles 1 imprimées des deux côtés destinées à être contrôlées par deux caméras 2, 3 qui effectuent un contrôle de la qualité de l'impression de chaque face de la feuille 1 par réflexion, des moyens d'éclairage 4, 5 étant prévus à cet effet, et une caméra 6 pour le contrôle de qualité par transparence, une source de lumière 7 étant disposée de l'autre côté de la caméra.

Les moyens de transfert de la feuille 1 sont composés de tapis roulants superposés 8, 9, 10, 11, 12, 13. Les tapis superposés sont faits ou revêtus d'une matière élastique et sont en contact ainsi la feuille est pincée entre les deux tapis et reste bien à plat. Néanmoins, sur les figures, pour la clarté du dessin, cette condition n'est pas respectée. Aux endroits se trouvant les caméras 2 et 3, le tapis roulant se trouvant du côté de la caméra est interrompu. Ainsi pour la caméra 2 un espace est prévu face à la caméra entre les tapis roulants 9 et 10 pour permettre le contrôle par cette caméra de la face supérieure de la feuille 1. Dans cet intervalle, entre les tapis roulants 9 et 10, la feuille 1 est maintenue contre le tapis roulant 8 par aspiration. Dans ce but, une chambre 13 reliée à une source de vide (non représentée), se trouve au-dessous du tapis 8 qui est muni de trous en communication avec la chambre 13 pour permettre de maintenir la feuille 1 bien à plat sur sa surface. Le tapis glisse sur le bord de la chambre 14 pour assurer une bonne étanchéité tapis/chambre et limite les pertes de la dépression.

De la même manière, lorsque la feuille passe face à la caméra 3, un espace correspondant à la longueur de la feuille existe entre les tapis roulants 8 et 11 pour permettre le contrôle de l'image imprimée sur l'autre face de la feuille 1. Lorsque la feuille passe devant la caméra 3, elle est maintenue contre le tapis roulant 10 au moyen d'une deuxième chambre 15 reliée à une source de vide, le tapis étant muni également de trous en communication avec la chambre 15.

Pour le contrôle de qualité par transparence, face à la caméra 6 chacune des plaques 16, 17 est munie respectivement d'une fente étroite 18, 19 dirigée perpendiculairement à la direction de déplacement pour permettre le contrôle par transparence.

Selon une variante d'exécution préférée dans cette chambre de contrôle de la qualité par transparence, un guidage des extrémités latérales de la feuille est prévu pour éviter que la feuille se mette de travers entre les deux plaques 16 et 17. Ces guidages latéraux peuvent être de simples glissières déplaçables perpendiculairement au sens de déplacement de la feuille pour permettre de les adapter à la largeur de la feuille à contrôler.

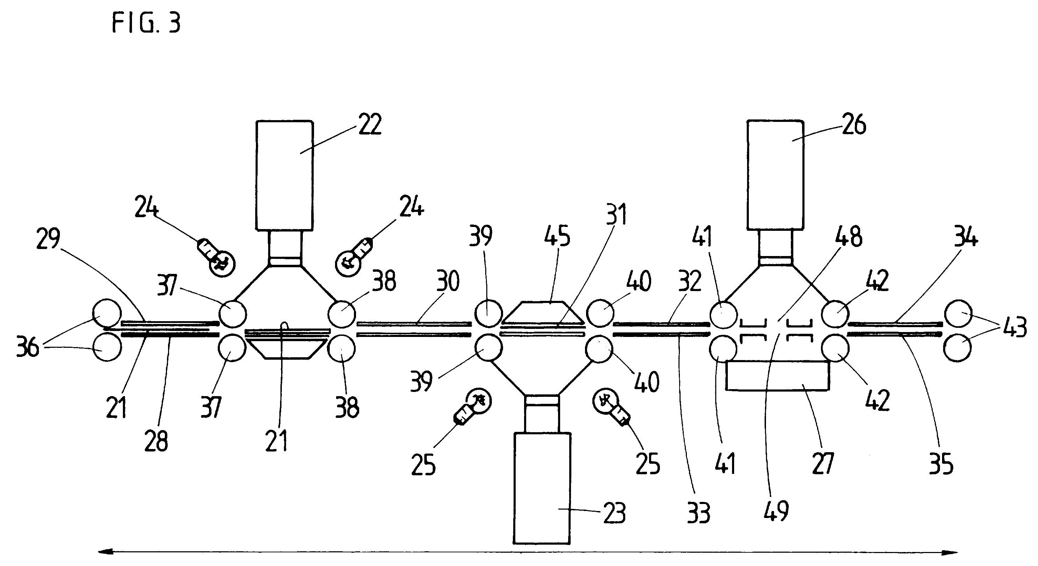

Une variante d'exécution qui sera maintenant décrite à l'aide de la figure 3.

Le dispositif de la figure 3 est similaire à celui de la figure 1 sauf que les moyens de transfert des feuilles sont composés de plaques de guidage et de rouleaux. Dans ce dispositif également, deux caméras 22 et 23 sont disposées pour le contrôle de la qualité d'impression sur chacune des faces d'une feuille 21, des moyens d'éclairage 24 et 25 assurent l'éclairage de chacune des faces de la feuille à contrôler, tandis qu'une caméra pour le contrôle par transparence 26 avec une source de lumière 27 sont également prévus. Les moyens de transfert sont composés d'une part des plaques 28, 29, 30, 31, 32, 33, 34, 35 et de paires de rouleaux 36, 37, 38, 39, 40, 41, 42 et 43 dont l'espacement longitudinal est inférieur à la longueur d'une feuille 21. Le rôle des plaques est d'assurer que les feuilles imprimées se déplacent complètement à plat et les rouleaux 35 à 42 assurent l'avancement de la feuille. Deux rouleaux superposés et deux plaques superposées sont en contact et sont faits ou revêtus d'une matière élastique permettant ainsi le transport à plat des feuilles. Néanmoins, pour la clarté du dessin, on n'a pas respecter cette condition. Face à chacune des caméras 22 et 23 il n'y a pas de plaque entre la face de la feuille 21 à contrôler et la caméra pour permettre justement le contrôle de l'image par réflexion. La plaque se trouvant de l'autre côté de la caméra est perforée et munie d'une chambre 44, respectivement 45, reliée à une source de vide et aspire la feuille pour la maintenir contre elle complètement à plat. La feuille 21 glisse sur ladite plaque poussée par les rouleaux 37 et tirée par les rouleaux 38, respectivement 39 et 40.

Le contrôle devant la caméra par transparence 26 se fait également de la même manière que pour le dispositif 1 au moyen de plaques superposées 46, 47 qui laissent entre-elles des fentes de contrôle 48, 49.

A la figure 4, on a représenté l'exécution préférée, c'est-à-dire l'installation avec des fenêtres pour le contrôle par réflexion dont la longueur correspond à une fraction de la longueur de la feuille, habituellement 2-3 cm permettant un bon éclairage de la zone à contrôler. Bien entendu, cette possibilité est offerte par l'utilisation d'une caméra à lecture linéaire (ligne par ligne) au fur et à mesure de l'avancement de chaque feuille. On a donc représenté des tapis roulants 8', 9', 10', l'espacement d entre les tapis 9' et 10' étant qu'une fraction de la longueur de la feuille. Bien entendu, la même disposition peut être utilisée pour la seconde fenêtre et également pour l'exécution de la figure 3.

On a également représenté sur le tapis 8' des trous inclinés 50 permettant d'avoir un plan homogène optiquement car de la lumière parasite ne peut pas pénétrer par l'extrémité inférieure des trous et la lumière incidente réfléchie est de la même couleur sur la totalité de la surface en appui sur le tapis. C'est-à-dire que le fait qu'il y a des trous sur le tapis n'a aucune incidence sur la lumière réfléchie par rapport à un tapis sans trous.

Les moyens décrits pour maintenir par aspiration les feuilles face aux caméras pour le contrôle par réflexion ne sont qu'un exemple et d'autres exécutions sont possibles.

## Revendications

1. Installation de contrôle de qualité de feuilles imprimées, notamment des papiers-valeur, comprenant des moyens de transfert desdites feuilles pour transporter lesdites feuilles dans un plan et effectuer en un seul passage et successivement le contrôle de la qualité de l'impression de chacune des faces de la feuille ainsi qu'un contrôle de qualité par transparence par des moyens de contrôle de la qualité de l'impression comprenant deux caméras (2, 3; 22, 23) disposées de part et d'autre dudit plan à deux endroits décalés pour le contrôle de qualité de la face correspondante par réflexion et une troisième caméra (6; 26) pour le contrôle par transparence, caractérisé par le fait que les moyens de transfert sont constitués de dispositifs de transfert superposés entre lesquels les feuilles (1, 1'; 21) se déplacent, que devant chacune des caméras de contrôle (2, 3; 22, 23) d'une face par réflexion lesdits moyens de transfert sont agencés pour laisser une fenêtre ouverte du côté de la caméra en ne disposant à l'emplacement et sur la longueur désirée de la fenêtre qu'un dispositif de transfert agencé pour maintenir par aspiration la feuille (1, 1'; 21) bien en place face à la caméra (2, 3; 22, 23) et que devant la caméra de contrôle par transparence (6; 26) une paire de plaques superposées (16, 17; 46, 47) maintiennent les feuilles (1, 1'; 21) à plat et qu'une fente (18, 19; 48, 49) de chacune des plaques (16, 17; 46, 47) permet de contrôler par transparence, ladite fente étant disposée perpendiculairement au sens du déplacement des feuilles.

2. Installation selon la revendication 1, caractérisée par le fait que les caméras (2, 3, 6; 22, 23, 26) sont des caméras à lecture linéaire et que la fenêtre laissée de côté de chaque caméra (2, 3; 22, 23) a une longueur correspondant à une fraction de la longueur de la feuille à contrôler (1, 21).

3. Installation selon l'une des revendications 1 ou 2, caractérisée par le fait que les dispositifs de transfert sont des tapis roulant (8, 9, 10, 11, 12, 13; 8', 9', 10') superposés entre lesquels les feuilles (1; 1') se déplacent.

4. Installation selon l'une des revendications 1 ou 2, caractérisée par le fait que les dispositifs de transfert comprennent des plaques de guidage superposées (28-35) et des paires de rouleaux (36-43) pour l'entraînement des feuilles, lesdites paires de rouleaux étant espacées longitudinalement d'une distance inférieure à la longueur des feuilles à contrôler.

5. Installation selon l'une des revendications 2 ou 4, caractérisée par le fait que devant la caméra de contrôle par transparence (6, 26), en plus de la paire de plaques (16, 17; 48, 49) superposées des moyens de guidage des bords latéraux des feuilles sont prévus.

6. Installation selon l'une des revendications 2 à 5, caractérisée par le fait que les moyens de transfert (8, 10; 28, 31; 8') maintenant la feuille par aspiration, sont munis de trous (50) d'axe incliné par rapport au plan de transport.

7. Installation selon la revendication 6, caractérisée par le fait que l'inclinaison est comprise entre 30° et 45°.

## Patentansprüche

1. Installation zur Qualitätskontrolle von bedruckten Bogen, insbesondere von Wertpapieren, mit Transportmitteln, um die erwähnten Bogen in einer Ebene zu transportieren und in einem einzigen Durchgang und aufeinanderfolgend die Kontrolle der Druckqualität jeder der beiden Bogenseiten sowie eine Qualitätskontrolle durch Transparenz mit Mitteln zur Kontrolle der Druckqualität durchzuführen, mit zwei Kameras (2, 3; 22, 23), die beiderseits der erwähnten Ebene an zwei versetzten Stellen zur Qualitätskontrolle der entsprechenden Seite durch Reflexion angeordnet sind, und mit einer dritten Kamera (6; 26) zur Kontrolle durch Transparenz, dadurch gekennzeichnet, dass die Transportmittel aus übereinander angeordneten Transportvorrichtungen bestehen, zwischen denen sich die Bogen (1, 1'; 21) bewegen, dass vor jeder der Kameras (2, 3; 22, 23) zur Kontrolle einer Seite durch Reflexion die erwähnten Transportmittel so ausgebildet sind, dass kameraseitig ein Fenster offen gelassen ist, indem am Ort und über die gewünschte Länge des Fensters nur eine Transfervorrichtung angeordnet ist, welche den Bogen (1, 1', 21) durch Ansaugung vor der Kamera (2, 3; 22, 23) hält, und dass vor der Kamera zur Kontrolle durch Transparenz (6; 26) ein Paar übereinander angeordneter Platten (16, 17; 46, 47) die Bogen (1, 1'; 21) in ebenem Zustand halten und dass ein in jeder der Platten (16, 17; 46, 47) vorgesehener Schlitz (18, 19; 48, 49) die Kontrolle durch Transparenz erlaubt, wobei der erwähnte Schlitz senkrecht zur Bewegungsrichtung der Bogen angeordnet ist.

2. Installation nach Anspruch 1, dadurch gekennzeichnet, dass die Kameras (2, 3, 6; 22, 23, 26) Kameras zum linearen Lesen sind und dass das Fenster, welches an der Seite jeder Kamera (2, 3; 22, 23) vorgesehen ist, eine Länge hat, welche einem Bruchteil der Länge des zu kontrollierenden Bogens (1, 21) entspricht.

3. Installation nach einem der Ansprüche 1 oder 2, dadurch gekennzeichnet, dass die Transportvorrichtungen übereinander angeordnete Förderbänder (8, 9, 10, 11, 12, 13; 8', 9', 10') sind, zwischen denen sich die Bogen (1; 1') bewegen.

4. Installation nach einem der Ansprüche 1 oder 2, dadurch gekennzeichnet, dass die Transportvorrichtungen übereinander angeordnete Führungsplatten (28 bis 35) sowie Paare von Rollen (36 bis 43) zum Antrieb der Bogen aufweisen, wobei die erwähnten Rollenpaare in Längsrichtung in einem Abstand voneinander angeordnet sind, der kleiner als die Länge der zu kontrollierenden Bogen ist.

5. Installation nach einem der Ansprüche 2 oder 4, dadurch gekennzeichnet, dass vor der Kamera zur Kontrolle durch Transparenz (6, 26) zusätzlich zum Paar der übereinander angeordneten Platten (16, 17; 48, 49) Mittel zum Führen der seitlichen Bogenränder vorgesehen sind.

6. Installation nach einem der Ansprüche 2 bis 5, dadurch gekennzeichnet, dass die Transportmittel (8, 10; 28, 31; 8'), welche den Bogen durch Ansaugung halten, mit Löchern (50) versehen sind, über eine Achse in bezug auf die Transportebene geneigt ist.

7. Installation nach Anspruch 6, dadurch gekennzeichnet, dass die Neigung zwischen 30° und 45° beträgt.

## Claims

1. Quality control assembly for printed sheets, in particular for security paper, comprising transfer means of said sheets to transport said sheets in a plane and to carry out a check on and in succession the print quality of each of the faces of the sheet as well as a quality check using transparency in a single pass, comprising two cameras (2, 3 ; 22, 23) located on either side of said plane at two offset locations for checking the quality of the corresponding face using reflection, and a third camera (6 ; 26) for checking using transparency, characterised in that the transfer means comprise superposed conveyor devices between which the sheets (1, 1' ; 21) travel, in that in front of each of the cameras (2, 3 ; 22, 23) for checking one face using reflection the transfer means are designed to leave an open window beside each camera by disposing in the place and over the desired length of the window just one transfer device designed to hold the sheet (1, 1' ; 21) using suction truly in place facing the camera (2, 3 ; 22, 23) and in that in front of the camera (6 ; 26) for transparency check, a pair of superposed plates (16, 17 ; 46, 47) keep the sheets (1, 1' ; 21) flat and a slit (18, 19 ; 48, 49) of each of the plates (16, 17 ; 46, 47) allows to check using transparency, the said slit being arranged perpendicularly to the direction of travel of the sheets.

2. The assembly as claimed in claim 1, characterised in that the cameras (2, 3, 6 ; 22, 23, 26) are linear array cameras and in that the window left to the side of each camera (2, 3 ; 22, 23) has a length corresponding to a fraction of the length of the sheet (1, 21) to be checked.

3. The assembly as claimed in one of claims 1 and 2, characterised in that the transfer devices are superposed conveyor belt devices (8, 9, 10, 11, 12, 13 ; 8', 9', 10') between which the sheets (1 ; 1') travel.

4. The assembly as claimed in one of claims 1 and 2, characterised in that the transfer devices comprise superposed guide plates (28-35) and pairs of rollers (36-43) for the entrainment of the sheets, said pairs of rollers being spaced longitudinally by a distance less than the length of the sheets to be checked.

5. The assembly as claimed in one of claims 2 and 4, characterised in that in front of the camera (6, 26) for the transparency check, in addition to the pair of superposed plates (16, 17 ; 48, 49) means are provided for guiding the lateral edges of the sheets.

6. The assembly as claimed in one of claims 2 to 5, characterised in that the transfer means (8, 10 ; 28, 31 ; 8') holding the sheet by suction are equipped with holes (50) having an axis which is inclined relative to the transport plane.

7. The assembly as claimed in claim 6, characterised in that the inclination lies between 30° and 45°.
